# EUROPEAN PATENT APPLICATION

(11) **EP 4 823 041 A1**
(43) Date of publication of application: **14.10.2026**
(21) Application number: 26171223.6
(22) Date of filing: 08.04.2026
(51) Int. Cl.: H04L 9/40, H04L 12/46, H04L 67/02

(54) **SYSTEMS AND METHODS FOR MITIGATING TCP SYN-ACK FLOODING ATTACKS**

(30) Priority: 10.04.2025 US 202519176065
(71) Applicant: NetScout Systems, Inc., Westford, MA 01886 (US)
(72) Inventor: St. Pierre, Brian, Westford, 01886 (US); Bjarnason, Steinthor, Westford, 01886 (US)
(74) Representative: Marks & Clerk LLP

(57) **Abstract**

A network monitoring device can include one or more memory devices that can store executable instructions thereon that, when executed by one or more processors, cause the one or more processors to monitor network traffic transmitted across a communications network, detect at least one first data packet corresponding to a request to establish a communication session, ingest first information associated with the at least one first data packet into a probabilistic data structure, identify at least one second data packet corresponding to a response, determine that the response does not correspond to either (i) the request or (ii) a plurality of requests, and drop the at least one second data packet from the communications network.

## Description

### CROSS-REFERENCE TO RELATED APPLICATIONS

This application claims the benefit of priority as a Continuation-In-part to U.S. Patent Application No.: 18/464,605, the entirety of which is incorporated by reference herein.

### BACKGROUND

Distributed denial of service (DDoS) attacks are used by malicious actors to deny access to a given network service. DDoS attacks can include a flood of Transmission Control Protocol (TCP) synchronize-acknowledge (SYN-ACK) packets which do not relate to any TCP synchronize (SYN) packets. The flood of TCP SYN-ACK packets can maliciously consume network resources such as network connection. The malicious consummation of network resources can result in a denial of service.

### BRIEF DESCRIPTION OF THE DRAWINGS

The accompanying drawings are not intended to be drawn to scale. Like reference numbers and designations in the various drawings indicate like elements. For purposes of clarity, not every component may be labeled in every drawing. In the drawings:
FIG. 1 is an illustration of a system, in accordance with an implementation;
FIG. 2 illustrates a scenario of operating a system to detect TCP SYN-ACK flooding attacks, in accordance with an implementation;
FIG. 3 is an illustration of a method for detecting TCP SYN-ACK flooding attacks, in accordance with an implementation;
FIG. 4 is an illustration of a method for detecting TCP SYN-ACK flooding attacks, in accordance with an implementation.
FIG. 5A is a block diagram depicting an implementation of a network environment including a client device in communication with a server device;
FIG. 5B is a block diagram depicting a cloud computing environment including a client device in communication with cloud service providers; and
FIG. 5C is a block diagram depicting an implementation of a computing device that can be used in connection with the systems depicted in FIGS. 1-2, 5A, and 5B and the methods depicted in FIGS. 3-4.

### DETAILED DESCRIPTION

In the following detailed description, reference is made to the accompanying drawings, which form a part hereof. In the drawings, similar symbols typically identify similar components, unless context dictates otherwise. The illustrative embodiments described in the detailed description, drawings, and claims are not meant to be limiting. Other embodiments may be utilized, and other changes may be made, without departing from the spirit or scope of the subject matter presented here. It will be readily understood that the aspects of the present disclosure, as generally described herein, and illustrated in the figures, can be arranged, substituted, combined, and designed in a wide variety of different configurations, all of which are explicitly contemplated and make part of this disclosure.

DDoS attacks that utilize or include a flood of TCP SYN-ACK packets and/or synchronize-acknowledge packets are among the top ten most common attack types on the internet. In general, TCP SYN-ACK packets should only be sent in response to an initial TCP SYN packet. Accordingly, TCP SYN-ACK flooding attacks involve the transmission of multiple SYN-ACK packets that do not correspond to previously sent TCP SYN packets. TCP SYN-ACK flooding attacks can be mitigated by only allowing TCP SYN-ACK packets (that match a previously sent TCP SYN packet and/or synchronize) to be forwarded or transmitted within a protected network. However, monitoring TCP communication results in a collection of large amounts of state information and thereby consumes substantial memory resources. Furthermore, the large amount of state information poses significant challenges with respect to detecting TCP SYN-ACK flooding attacks.

The techniques described herein may overcome the aforementioned technical deficiencies in detecting TCP SYN-ACK flooding attacks. A computer may do so by generating a probabilistic data structure that can store information associated with TCP SYN packets and/or synchronize packets. For example, the probabilistic data structure can store information that corresponds to Internet Protocol (IP) addresses and/or TCP port information. The computer may implement or execute a hash function to generate one or more hash values from the TCP SYN packet information. For example, the computer may extract a 4-tuple of information from a TCP SYN packet. The computer may execute a hash function to generate a hash value that corresponds to the 4-tuple of information. The execution of the hash function may reduce the amount of data from 288 bytes to 2 bytes. For example, the 4-tuple of information may include 288 bytes of data, and the hash value may include only 2 bytes of data.

Moreover, the computer may maintain or utilize multiple probabilistic data structures. For example, the computer may utilize a current bloom filter and a previous bloom filter. In this example, the current bloom filter may represent the most recent or current TCP SYN packet information, and the previous bloom filter may represent TCP SYN packet information which was received prior to a given amount of time having elapsed. Stated otherwise, the computer may move or otherwise relocate, at one or more time intervals or amounts of time, information from the current bloom filter to the previous bloom filter. The relocation of the information can keep the current bloom filter up-to-date or otherwise current. Additionally, the relocation of the information can prevent the current bloom filter from storing stale or otherwise aged information. As an example, the computer can discard the previous bloom filter, re-designate the current bloom filter as a previous bloom filter, and generate or otherwise create a new current bloom filter.

When a protected device (e.g., a device that the computer is monitoring) sends a TCP SYN packet, the computer can extract a 4-tuple of information from the TCP SYN packet. For example, the computer can extract a source IP address, a destination IP address, a source TCP port, and/or a destination TCP port. The computer can store, as a hash value, the 4-tuple in the probabilistic data structure. For example, the computer can store the hash value in the current bloom filter. As the computer detects, identifies, or otherwise receives incoming TCP SYN-ACK packets, the computer can check the probabilistic data structure for matches (e.g., corresponding TCP SYN packets). If the computer finds a match, the computer may forward or otherwise transmit the TCP SYN-ACK packet. Additionally and/or alternatively, if no matches are found, the computer may drop or otherwise discard the TCP SYN-ACK packet from the network.

The computer can match TCP SYN-ACK packets to TCP SYN packets (that are stored in the probabilistic data structure) by (1) detecting that a protected device has sent a TCP SYN packet, (2) storing a 4-tuple of information (e.g., source IP address, destination IP address, source TCP port, and destination TCP port) that was extracted from the TCP SYN packet, (3) extracting a 4-tuple of information from incoming TCP SYN-ACK packets, and (4) checking for a corresponding TCP SYN packet by swapping either the source and destination information for the TCP SYN packets or the source and destination information for the TCP SYN-ACK packets. For example, a TCP SYN packet corresponds to a TCP SYN-ACK packet when the source IP address (for the TCP SYN packet) matches the destination IP address for the TCP SYN-ACK packet. As another example, a TCP SYN packet corresponds to a TCP SYN-ACK packet when the source IP address (for the TCP SYN-ACK packet) matches the destination IP address for the TCP SYN packet. Stated otherwise, the source IP address and the destination IP address for a first packet (e.g., a TCP SYN packet, a TCP SYN-ACK packet, etc.) are opposite of the source IP address and the destination IP address for a second packet (e.g., a TCP SYN packet, a TCP SYN-ACK packet, etc.). The computer may utilize or otherwise compare TCP source ports and TCP destination ports. For example, the computer may compare a TCP source port (identified from a TCP SYN packet) with a TCP destination port (identified from a TSP SYN-ACK packet). Stated otherwise, the computer may compare TCP ports by comparing a TCP source port or TCP destination port (of a first data packet) with the opposite TCP port for a second packet.

While some examples described herein may refer to or include TCP communication, this is for illustrative purposes only and is in no way limiting. For example, the computer described herein may implement or execute at least one of the techniques described herein for other types of message exchanges that include distinct request packets (that initiate from an internal network) and corresponding response packets from the external network. For example, the computer may utilize at least one of the techniques to monitor Internet Control Message Protocol (ICMP) messages such as outbound echo requests and inbound echo replies. As another example, the computer may utilize at least one of the techniques to monitor traceroute and/or Path Maximum Transmission Unit Discovery (PMTUD) messages. As another example, the computer may utilize at least one of the techniques to monitor for Network Time Protocol (NTP) amplification attacks. The computer may store, in a bloom filter, an 8 byte timestamp (e.g., a transmit timestamp) (which was extracted from an outbound NTP query). The computer may compare timestamps (e.g., origin timestamps) (extracted from subsequent inbound NTP responses) to match outbound NTP queries to inbound NTP responses.

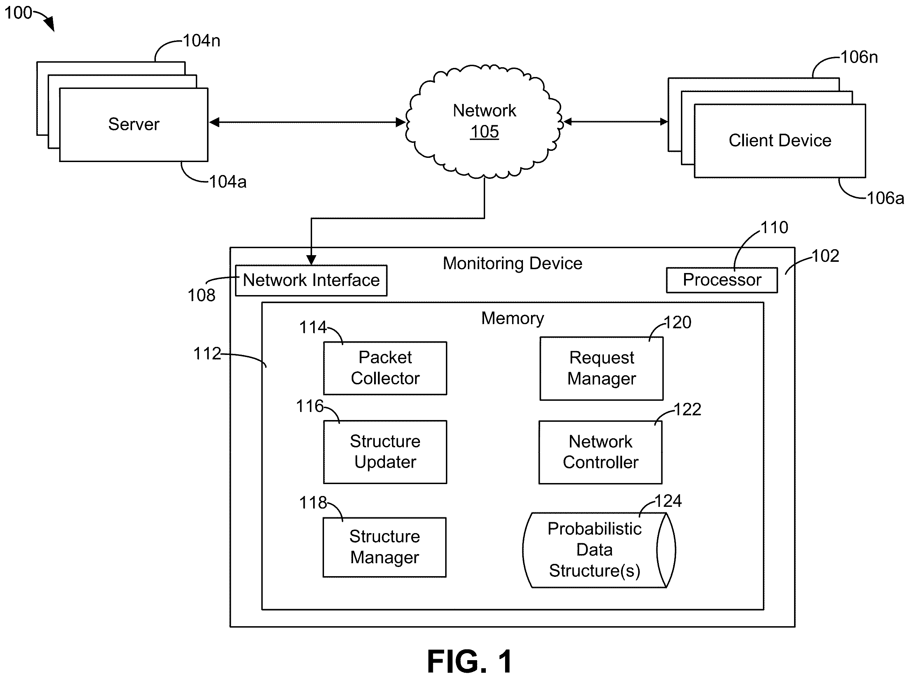

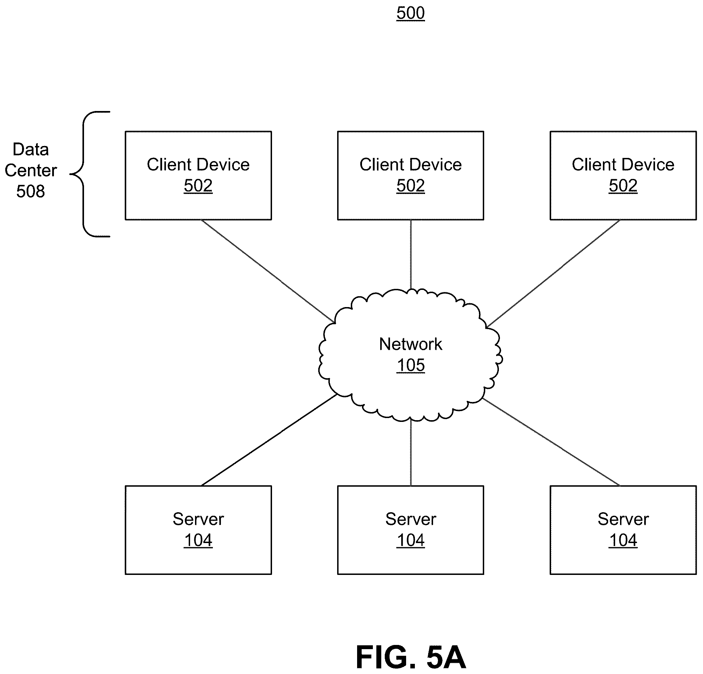

FIG. 1 illustrates an example system 100 for detecting TCP SYN-ACK flooding attacks, in some embodiments. The system 100 may protect devices from flooding attacks by detecting one or more TCP SYN-ACK packets for which corresponding TCP SYN packets were not transmitted or otherwise provided. In brief overview, the system 100 can include a monitoring device 102 that receives or retrieves data packets transmitted via a network 105 between client devices 106a-n (hereinafter client device 106 or client devices 106) and servers 104a-n (hereinafter server 104 or servers 104). Client devices 106 can communicate with the servers 104 via the network 105. The client devices 106 can each include a set of one or more client devices 502, depicted in FIG. 5A, or a data center 508. The monitoring device 102 can intercept data packets, transmitted by servers 104, intended for the client devices 106 and data packets, transmitted by the client devices 106, intended for the servers 104. The monitoring device 102 can monitor data packets transmitted between the client devices 106 and the servers 104 in both directions, the outbound direction in which the monitoring device 102 collects data packets transmitted by servers 104, and the inbound direction in which the monitoring device 102 collects data packets transmitted by the client devices 106 intended for the servers 104. The monitoring device 102 can store information associated with TCP communication. For example, the monitoring device 102 can store information associated with one or more TCP SYN packets. As another example, the monitoring device 102 can store information associated with one or more TCP SYN-ACK Packets. The monitoring device 102 can compare one or more TCP SYN-ACK packets (and/or corresponding information) with previously detected TCP SYN packets. The monitoring device 102 can drop (e.g., remove, prevent transmission, etc.) one or more TCP SYN-ACK packets for which the monitoring device 102 determines as not corresponding to one or more TCP SYN packets. The monitoring device 102 can forward or otherwise transmit one or more TCP SYN-ACK packets upon the monitoring device 102 detecting that the TCP SYN-ACK packets correspond to one or more TCP SYN packets. In this way, the monitoring device 102 can ensure the client devices 106 only receive TCP SYN-ACK packets that correspond to TCP SYN packets that were previously transmitted by the client devices 106.

While some examples described herein may refer to or include description regarding filtering, monitoring, or otherwise evaluating TCP SYN-ACK packets transmitted to or intended for delivering to the client devices 106, this is for illustrative purposes only and is in no way limiting. For example, the monitoring device 102 may monitor or evaluate TCP SYN-ACK packets intended for the servers 104. Stated otherwise, the monitoring device 102 may store, in the probabilistic data structure 124, information associated with TCP SYN packets (transmitted by the servers 104). The monitoring device 102 may, using the information stored in the probabilistic data structure 124, detect one or more TCP SYN-ACK packets that do not correspond to one or more TCP SYN packets. The monitoring device 102 may, upon detection of the TCP SYN-ACK packets, protect the servers 104 by dropping the TCP SYN-ACKS from the network 105.

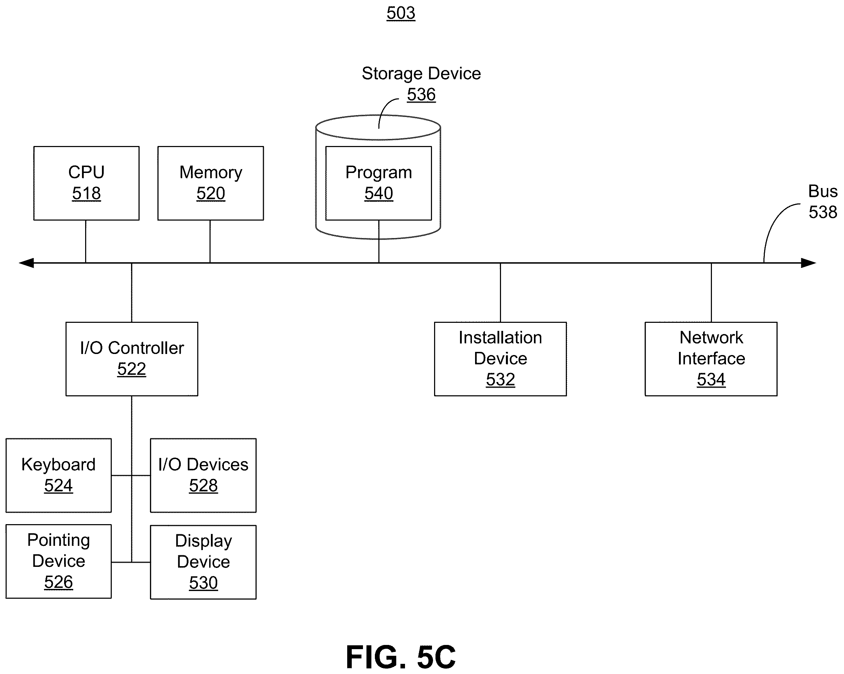

The monitoring device 102, the client devices 106, and the servers 104, can include or execute on one or more processors or computing devices (e.g., computing device 503 depicted in FIG. 5C) and/or communicate via the network 105. The network 105 can include computer networks such as the Internet, local, wide, metro, or other area networks, intranets, satellite networks, and other communication networks such as voice or data mobile telephone networks. The network 105 can be or include a 5G network or any other type of network. The network 105 can be used to access information resources such as web pages, websites, domain names, or uniform resource locators that can be presented, output, rendered, or displayed on at least one computing device (e.g., client device 106), such as a laptop, desktop, tablet, personal digital assistant, smartphone, portable computers, or speaker. For example, via the network 105, the client devices 106 can transmit one or more TCP SYN packets to the servers 104. In some embodiments, the network 105 may be or include a self-organizing network that implements a machine learning model to automatically adjust connections and configurations of network elements of the network 105 to optimize network connections (e.g., minimize latency, reduce dropped calls, increase data rate, increase quality of service, etc.).

Each of the monitoring device 102, the client devices 106, and the servers 104 can include or utilize at least one processing unit or other logic device such as programmable logic array engine, or module configured to communicate with one another or other resources or databases. The components of the monitoring device 102, the client devices 106, and/or the servers 104 can be separate components or a single component. The system 100 and its components can include hardware elements, such as one or more processors, logic devices, or circuits.

The client devices 106 can include or execute applications (e.g., browsers) to communicate with the servers 104. In doing so, the client devices 106 can transmit one or more requests (e.g., TCP SYN packets) to establish communication with the servers 104. For example, a user of a client device 106 can input a domain name into an application executing on the client device 106. Upon input of the domain name, the client device 106 may transmit a TCP SYN packet to communicate with at least one of the servers 104 that corresponds to the entered domain name.

The monitoring device 102 may comprise one or more processors that are configured to collect data packets transmitted between the client devices 106 and the servers 104. The monitoring device 102 may comprise a network interface 108, a processor 110, and/or memory 112. The monitoring device 102 may communicate with any of the client devices 106 and/or the servers 104 via the network interface 108. The processor 110 may be or include an ASIC, one or more FPGAs, a DSP, circuits containing one or more processing components, circuitry for supporting a microprocessor, a group of processing components, or other suitable electronic processing components. In some embodiments, the processor 110 may execute computer code or modules (e.g., executable code, object code, source code, script code, machine code, etc.) stored in the memory 112 to facilitate the operations described herein. The memory 112 may be any volatile or non-volatile computer-readable storage medium capable of storing data or computer code. The monitoring device 102 may be positioned in front of one or more of the client devices 106 such that the client devices 106 are protected devices. The monitoring device 102 can monitor network traffic sent to and from the client devices 106. The monitoring device 102 can block certain packets from passing to the client devices 106 based on decisions made by the monitoring device 102.

The memory 112 may include a packet collector 114, a structure updater 116, a structure manager 118, a request manager 120, a network controller 122, and/or one or more probabilistic data structures 124, in some embodiments. In brief overview, the components 114-122 may collect data packets that correspond to TCP communication (e.g., TCP SYN packets, TCP SYN-ACK packets, etc.) between the client devices 106 and the servers 104. The components 114-122 can generate a probabilistic data structure 124 to store information that corresponds to the TCP communication. The components 114-122 may collect data packets that correspond to TCP SYN packets transmitted by the client devices 106. Additionally or alternatively, the components 114-122 may collect data packets that correspond to TCP SYN-ACK packets. In some embodiments, the TCP communication (e.g., the TCP SYN packets, the TCP SYN-ACK packets, etc.) may be stored in the probabilistic data structure. In some embodiments, the memory 112 may include one or more memory devices that store executable instructions thereon (e.g., in memory 112).

The packet collector 114 may comprise programmable instructions that, upon execution, cause the processor 110 to receive or collect data (e.g., data packets) transmitted between the client devices 106 and the servers 104. The packet collector 114 may receive, retrieve, or collect data packets that are transmitted over the network 105 between the client devices 106 and the servers 104. For example, the packet collector 114 may receive or retrieve data packets of TCP SYN requests from the client devices 106 to the servers 104. The packet collector 114 may receive or retrieve such data packets while the monitoring device 102 operates as an intermediate computing device between the client devices 106 and the servers 104.

The packet collector 114 may collect TCP SYN-ACK responses from the servers 104. For example, the packet collector 114 may collect and forward TCP SYN-ACK packets from the servers 104 to the client devices 106. The packet collector 114 may forward the TCP SYN-ACK packets to the client devices 106.

The structure updater 116 may comprise programmable instructions that, upon execution, cause the processor 110 to generate and/or update a probabilistic data structure 124 based on the TCP SYN packets and/or the TCP SYN-ACK packets. For example, the structure updater 116 can parse one or more TCP SYN packets to identify at least one of an IP address and/or a TCP port number. The IP addresses may correspond to at least one of the client devices 106 and/or the server 104. For example, a given TCP SYN packet may include information to identify a source IP address and a destination IP address. The structure updater 116 can parse TCP SYN packets and/or TCP SYN-ACK packets as the packet collector 114 collects information associated with TCP communication over time. The structure updater 116 can identify IP addresses and/or TCP port numbers and store the identified information in the probabilistic data structure 124.

The probabilistic data structure 124 can be, for example, a cuckoo filter or a bloom filter. The probabilistic data structure 124 can include representations or indications of different TCP communication sessions and/or TCP data packets that the structure updater 116 parses from communication received from the servers 104. For example, the probabilistic data structure may include hash representations of IP addresses and/or TCP port numbers that were extracted from one or more TCP SYN packets. Representations of any number of IP addresses and/or TCP port numbers can be stored in probabilistic data structure 124.

The structure updater 116 can generate or update the probabilistic data structure 124 over time. For example, the structure updater 116 can initialize an empty probabilistic data structure (e.g., a probabilistic data structure without any representations of TCP communication) 124. The packet collector 114 can collect data packets, that correspond to TCP communication, from at least one of the servers 104 and/or the client devices 106 over time. The structure updater 116 can parse the collected TCP communication data to identify IP addresses and/or TCP port numbers. The structure updater 116 can generate representations (e.g., calculate hash values or other representations, as applicable depending on the type of the probabilistic data structure 124) of the IP addresses and/or the TCP port numbers identified from corresponding TCP SYN packets and/or TCP SYN-ACK packets. The structure updater 116 can store the representations of the IP addresses and/or the TCP port numbers in the probabilistic data structure 124. The structure updater 116 can update the probabilistic data structure 124 in this way over time to maintain a list or record of TCP SYN packets awaiting or triggering a corresponding TCP SYN-ACK packet.

The structure manager 118 may comprise programmable instructions that, upon execution, cause the processor 110 to manage the probabilistic data structures 124 that the structure updater 116 generates and/or updates. The structure manager 118 can manage the probabilistic data structures 124 as the structure updater 116 generates probabilistic data structures for different time periods. In some embodiments, the structure manager 118 may apply one or more tags to information stored in the probabilistic data structure 124. For example, the structure manager 118 may apply tags to indicate and/or identify the time periods for which information should be stored in a given probabilistic data structure 124.

For example, the structure manager 118 can be configured to generate multiple probabilistic data structures 124 such that one or more versions or variances of information may be stored. To do so, the structure updater 116 can generate a first probabilistic data structure 124 using IP addresses and/or TCP port numbers that the structure updater 116 identifies during a first defined time period. The structure updater 116 can initialize the first probabilistic data structure 124 as an empty probabilistic data structure 124 and add hash values to the first probabilistic data structure 124 during the first defined time period. The structure manager 118 can label the first probabilistic data structure 124 as a "current" probabilistic data structure, indicating the first probabilistic data structure 124 is currently being updated by the structure manager 118. The current label can be any value. Responsive to the structure manager 118 and/or the structure updater 116 determining the first defined time period has ended, the structure manager 118 can update or change the label of the first probabilistic data structure 124 to a "previous" label, which indicates that the first probabilistic data structure 124 is still active but is not being updated. The previous label can be any value different from the current label.

The structure updater 116 can generate and initialize a second probabilistic data structure 124 as an empty probabilistic data structure 124 in response to the determination that the first defined time period has ended. The structure updater 116 can add IP addresses and/or TCP ports identified during a second defined time period (e.g., a second defined time period subsequent, or directly subsequent, to the first defined time period). The structure manager 118 can label the second probabilistic data structure 124 as a current probabilistic data structure. Both the first probabilistic data structure 124 and the second probabilistic data structure 124 can be used to determine whether one or more TCP SYN-ACK packets correspond to previously detected and/or transmitted TCP SYN packets.

Responsive to the structure manager 118 and/or the structure updater 116 determining the second defined time period has ended, the structure manager 118 can update or change the label of the second probabilistic data structure 124 to a previous label and delete, terminate, or otherwise remove from memory the first probabilistic data structure 124. This may be useful, for example, as an amount of time elapsed between a given TCP SYN packet and a corresponding TCP SYN-ACK packet is usually quite small (e.g., less than 50 milliseconds) and as a result routinely updating and/or replacing the probabilistic data structures 124 can keep the stored information up to date. The structure updater 116 and structure manager 118 can similarly generate, update, label, relabel, and delete probabilistic data structures 124 at set or non-set intervals any number of times. The structure updater 116 and structure manager 118 can generate and store or maintain any number of probabilistic data structures 124 at once (e.g., the multiple previous probabilistic data structures 124 can be stored at one time). The structure manager 118 can delete any number of probabilistic data structures 124 at the end of a defined time period.

The request manager 120 may comprise programmable instructions that, upon execution, cause the processor 110 to manage TCP communication between the client devices 106 and the servers 104. The request manager 120 can parse one or more data packets to identify at least one of TCP SYN packets and/or TCP SYN-ACK packets. For example, the request manager 120 can parse one or more TCP SYN-ACK packets to identify one or more IP addresses and/or TCP ports. The request manager 120 can query the probabilistic data structure 124 using the identified IP addresses and/or TCP ports. In doing so, the request manager 120 may determine whether a given TCP SYN-ACK packet corresponds to information in the probabilistic data structure 124. The request manager 120 can forward one or more TCP SYN-ACK packets responsive to a determination that the TCP SYN-ACK packets correspond to one or more TCP SYN packets represented in the probabilistic data structure 124.

In embodiments in which the structure updater 116 and the structure manager 118, generate and maintain multiple probabilistic data structures 124 for different defined time periods, the request manager 120 can query each of the multiple probabilistic data structures 124 for information that represents one or more TCP SYN packets. Stated otherwise, the request manager 120 may query one or more versions of the probabilistic data structures 124 to check for one or more TCP SYN packets that correspond to detecting TCP SYN-ACK packets.

The network controller 122 may comprise programmable instructions that, upon execution, cause the processor 110 to restrict or otherwise control data packets transmitted between client devices 106 and the servers 104. The network controller 122 can restrict transmission of one or more TCP SYN-ACK packets to a given client device 106. For example, the network controller 122 can restrict the transmission of TCP SYN-ACK packets for which one or more corresponding TCP SYN packets are missing or absent for the probabilistic data structure 124. The network controller 122 can do so using one or more methods. For example, the network controller 122 can restrict the transmission of one or more TCP SYN-ACK packets by dropping the TCP SYN-ACKs packs from a protected network (e.g., the network 105). As another example, the network controller 122 can restrict or limit traffic that originates with a device associated with the transmission of one or more TCP SYN-ACK packets that lack a corresponding TCP SYN packet.

In some embodiments, the structure updater 116 can delete entries from at least one of the probabilistic data structure 124. For example, the structure updater 116 can delete one or more hash values from a given probabilistic data structure 124. As another example, the structure updater 116 can replace and/or otherwise modify one or more entries. In some embodiments, the structure updater 116 can generate and/or maintain multiple probabilistic data structures 124 at once to account for stale or "aged" data. For example, the structure updater 116 can generate a current probabilistic data structure 124 using hash values that correspond to IP addresses and/or TCP port numbers extracted from TCP SYN packets during a first defined time period. The structure updater 116 can detect an end to the first defined time period. In response to detecting the end to the first define time period, the structure manager 118 can update a label (e.g., a designation) of the current probabilistic data structure 124 from a current label to a previous label. Stated otherwise, the structure updater 116 can modify and/or change a designation for a given probabilistic data structure 124.

In some embodiments, the packet collector 114 can collect TCP SYN packets that were transmitted and/or received during a second defined time period subsequent (e.g., immediately subsequent) to the first defined time period. The structure updater 116 can generate and update a new probabilistic data structure 124 with hash values that were generated using TCP SYN packet information transmitted during the second defined time period. The structure manager 118 can add a label (e.g., a designation) to the new probabilistic data structure 124 to indicate the new probabilistic data structure 124 is a current probabilistic data structure. In cases in which there was a previous probabilistic data structure 124 prior to the beginning of the second defined time period, the structure manager 118 can delete the previous probabilistic data structure 124. The structure updater 116 and the structure manager 118 can repeat (e.g., periodically repeat) this process to maintain the integrity of the stored information (e.g., hash values, IP addresses, TCP port numbers, etc.) and remove stale information from the probabilistic data structures 124. For example, the structure updater 116 may generate, responsive to modification of a designation for a current probabilistic data structure 124, a new or subsequent probabilistic data structure 124. In some embodiments, the defined time periods may be shorter when protecting one or more devices during a DDoS attack.

The request manager 120 can query both probabilistic data structures (e.g., the current probabilistic data structure 124 and the (non-deleted) previous probabilistic data structure 124). For example, the request manager 120 can identify IP addresses and/or TCP ports using hash values stored in the probabilistic data structures 124. In some embodiments, the request manager 120 can search (e.g., query) one or more versions of the probabilistic data structures 124. For example, the request manager 120 can query a current version and a previous version of the probabilistic data structure 124.

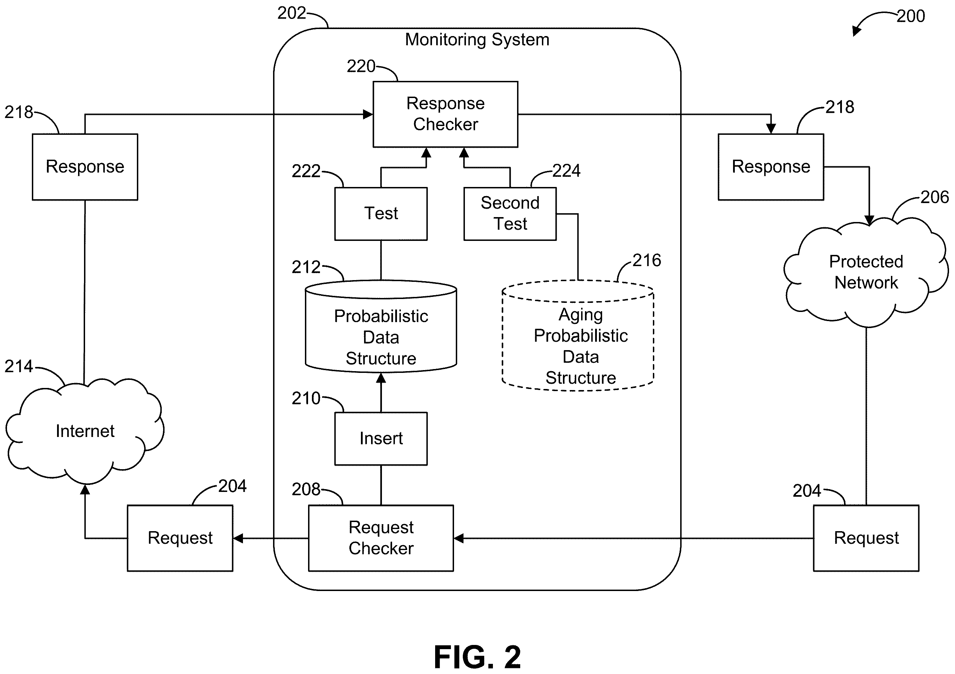

FIG. 2 illustrates a scenario 200 of operating a system to detect TCP SYN-ACK flooding attacks, in accordance with an implementation. Operations and actions performed in the scenario 200 can be performed by components of the system 100 or components that are similar to the components of the system 100, in some cases. The scenario 200 may include more or fewer operations or actions and the operations or actions may be performed in any order. The scenario 200 may involve more or fewer components.

In the scenario 200, a monitoring system 202 (e.g., the monitoring device 102, shown and described with reference to FIG. 1) can monitor TCP requests and TCP responses transmitted between computing devices and servers. In doing so, the monitoring system 202 may first collect one or more requests 204 (e.g., Transmission Control Protocol Synchronize packets, TCP SYN packets, etc.) transmitted by computing devices (e.g., client devices, protected devices, etc.) across a network 206 (e.g., a protected network). The monitoring system 202 can execute a request checker 208 to parse the requests 204 for information such as IP addresses (e.g., source IP address, destination IP address, etc.) and port numbers (e.g., TCP port numbers, source number, destination number, etc.). The request checker 208 can insert 210 one or more values and/or metrics into a probabilistic data structure 212. For example, the request checker 208 can ingest IP addresses and TCP port numbers, as pairwise combinations, in the probabilistic data structure 212. The monitoring system 202 can forward the requests 204 to one or more servers across a network (e.g., the Internet).

As the request checker 208 adds IP addresses and TCP port numbers to the probabilistic data structure 212, the monitoring system 202 can remove stale (e.g., old, aged, etc.) data from the probabilistic data structure 212. The monitoring system 202 can do so by iteratively generating and deleting probabilistic data structures over time. For example, in some embodiments, the monitoring system 202 can store an aging probabilistic data structure 216 in addition to the probabilistic data structure 212. The aging probabilistic data structure 216 may be a previous version of the probabilistic data structure 212 and the probabilistic data structure 212 may be a current version of the probabilistic data structure 212. The request checker 208 can store IP addresses and TCP port numbers in the probabilistic data structure 212 for a first defined time period.

At the end of the first defined time period, the probabilistic data structure 212 may become the aging probabilistic data structure 216. For a second defined time period subsequent to the first defined time period, the request checker 208 can store IP addresses and TCP port numbers in a new probabilistic data structure 212 that replaces the aging probabilistic data structure 216. At the end of the second defined time period, the monitoring system 202 can delete the aging probabilistic data structure 216, change the current probabilistic data structure 212 to be the aging probabilistic data structure 216, and insert IP addresses and TCP port numbers in the new probabilistic data structure 212. In this way, the monitoring system 202 may delete stale entries in probabilistic data structures without deleting individual entries, which may not be possible in the probabilistic data structures.

In response to detecting, transmitting, forwarding, and/or otherwise providing the requests 204 to one or more servers, the monitoring system 202 can begin monitoring one or more responses 218 that are transmitted across a network (shown as the Internet 214). The responses 218 may be transmitted by servers and may be intended for one or more client devices. The monitoring system 202 can execute a response checker 220 to determine whether IP addresses and/or TCP port numbers, pairwise, in the responses 218 have inverted values (e.g., source IP address and destination IP address are switched) stored in the probabilistic data structure 212 or the aging probabilistic data structure 216. Stated otherwise, given that the probabilistic data structures store values associated with the requests 204, the source and destination metrics (from the responses) are inverted or switched to check for matches. As another example, source IP addresses for requests 204 may correspond to destination IP addresses for responses 218.

In some embodiments, the response checker 220 can parse an IP addresses and a TCP port number from a response 218. In a first test 222, the response checker 220 can determine whether the IP address and the TCP port is represented in or stored in the probabilistic data structure 212. Responsive to determining the IP address and TCP port numbers are not stored in or represented in the probabilistic data structure 212, the response checker 220 can perform a second test 224 and determine whether the IP address and the TCP port number are represented in or stored in the aging probabilistic data structure 216. In embodiments in which the monitoring system 202 only stores the probabilistic data structure 212 and not the aging probabilistic data structure 216, the response checker 220 may only perform the first test 222.

Responsive to determining that the IP address and the TCP port number is stored in at least one of the probabilistic data structure 212 or the aging probabilistic data structure 216, the response checker 220 can forward the response 218 across the network 206 to the intended client device. Otherwise, the monitoring system 202 may drop or otherwise restrict the response 218 from being transmitted to the client device and/or restrict communication to or by the server that transmitted the response 218.

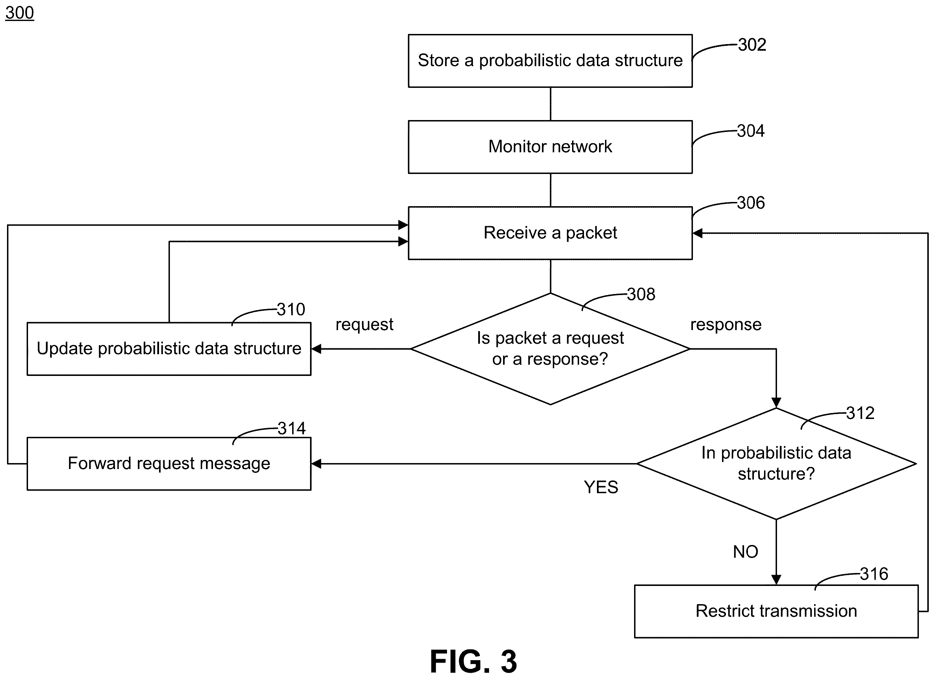

FIG. 3 is an illustration of a method 300 for protecting at least one client device or server, in accordance with an implementation. The method 300 can be performed by a data processing system (e.g., a client device, the monitoring device 102, shown and described with reference to FIG. 1, a server system, etc.). The method 300 may include more or fewer operations and the operations may be performed in any order. Performance of the method 300 may enable the data processing system to protect a client device against DDoS attacks that includes a flood of TCP SYN-ACK packets.

At operation 302, the data processing system stores a probabilistic data structure. The probabilistic data structure can be a cuckoo filter, a bloom filter, or any other type of probabilistic data structure. The data processing system can store the probabilistic data structure in memory. In some embodiments, the data processing system can store IP addresses and TCP port numbers (e.g., as a pairwise combination) in the probabilistic data structure, such as by storing representations (e.g., hash values) of the IP addresses and TCP port numbers in the probabilistic data structure.

At operation 304, the data processing system monitors a network. The data processing system collects, receives, or retrieves requests from a protected device. The requests may include TCP requests (e.g., TCP SYN packets,) transmitted by a client device or server over the network. The data processing system can operate as an intermediary server between a computing devices (that transmitted the TCP request) and a destination of the TCP request. The data processing system can receive the TCP requests and forward the TCP requests to a server or other possible destination.

At operation 306, the data processing system receives a data packet. The data processing system can receive the data packet from a server. The data processing system can receive the data packet while monitoring the network in operation 304.

At operation 308, the data processing system checks if the data packet is a request or a response. If the data packet is a request (e.g., TCP SYN packet), processing continues at operation 310. If the data packet is a response (e.g., TCP SYN-ACK packet), processing continues at operation 312.

At operation 310, the data processing system updates the probabilistic data structure. The data processing system can update the probabilistic data structure with data of the request. For example, the data processing system can parse a TCP request. In doing so, the data processing system can identify or extract an IP addresses (e.g., a source IP address, a destination IP address, etc.) and a port number (e.g., a source TCP port number, a destination TCP port number, etc.) from the TCP request. The data processing system can update the probabilistic data structure to include (e.g., ingest) the IP addresses and the port numbers, such as by storing an indication or representation (e.g., a hash or portion of a hash) of the IP addresses and port numbers in the probabilistic data structure. In cases in which the IP address and port number are already stored as a pair in the probabilistic data structure, the data processing system may not further update the probabilistic data structure, in some instances. The data processing system may repeat operations 306-310 any number of times while monitoring the network.

At operation 312, the data processing system determines if information associated with the response is stored in the probabilistic data structure. For example, the data processing system queries the probabilistic data structure to determine if one or more requests correspond to the response. The data processing system may query the probabilistic data structure using information extracted from the response. For example, the data processing system may query the probabilistic data structure using a source IP address (extracted from the response). As another example, the data processing system may query the probabilistic data structure using a destination port number (extracted from the response). In some embodiments, the data processing system can, at operation 314, utilize at least one of transaction identifiers, source ports/destination ports, and destination/source Internet Protocol addresses when searching the probabilistic data structure.

Additionally and/or alternatively, the data processing system can generate hash values for one or more of source IP addresses, destination IP addresses, TCP source port, TCP destination port, and/or among other information extracted from or identified within data packets. Stated otherwise, the data processing system 312 may generate hash values that represent information extracted from data packets. For example, the data processing system may generate a hash value to represent a source IP address, a destination IP address, a TCP source port, and/or a TCP destination port. The data processing system may store or otherwise maintain the hash values in a probabilistic data.

Upon receipt or detection of one or more data packets, the data processing system may query the probabilistic data structure for matches. For example, the data processing system may extract a source IP address, a destination IP address, a TCP source port, and a TCP destination port from a TCP SYN-ACK packet. Upon extraction of the information from the TCP SYN-ACK packet, the data processing system may swap, switch, and/or flip source information (e.g., source IP address, TCP source port, etc.) and destination information (e.g., destination IP address, TCP destination port, etc.). The data processing system may, subsequent to flipping the source information and the destination information, query the probabilistic data structure for one or more matches. For example, the data processing system may query the probabilistic data structure for a hash value that corresponds to or represents the swapped or flipped version of the source information and the destination information.

If information, extracted from the response, is absent or missing from the probabilistic data structure, processing continues to operation 316. If information, extracted from the response, is included in and/or corresponds to information in the probabilistic data structure, processing continues to operation 314.

At operation 314, the data processing system forwards the response to a computing device. Upon forwarding of the response, processing continues at operation 306.

At operation 316, the data processing system restricts transmission. The data processing system can restrict transmission of the response and/or communication by and/or to a computing device (e.g., server) that transmitted the response. For example, the data processing system can restrict transmission of the response by dropping a data packet (e.g., not forwarding the TCP response and/or removing the TCP response from memory). In another example, the data processing system can perform regular expression filtering. In another example, the data processing system can limit a rate of traffic transmitted to the computing device and/or received from the computing device. In this way, the data processing system can protect computing devices from TCP SYN-ACK flooding by dropping TCP responses (e.g., TCP SYN-ACK packets) which do not pertain to previously detected TCP requests.

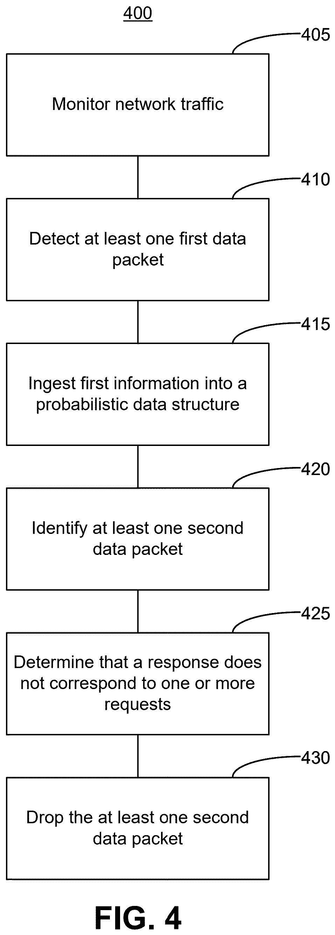

FIG. 4 is a method 400 for detecting TCP SYN-ACK flooding, in accordance with an implementation. The method 400 can be performed by one or more systems, components, or modules depicts in at least one of FIGS. 1 and/or 5A-5C, including, for example, a data processing system or service of a cloud service provider system. The method 400 may include more or fewer operations and the operations may be performed in any order. Performance of the method 400 may enable the data processing system to detect one or more DDoS attacks on a network.

At operation 405, the data processing system monitors network traffic. For example, the data processing system may monitor a transmission and/or exchange of data packets across a network. As another example, the data processing system may monitor inbound traffic intended for one or more devices on the protected network.

At operation 410, the data processing system detects at least one first data packet. For example, the data processing system may detect one or more first data packets transmitted by a client device on a protected network. In some embodiments, the first data packet may correspond to a request to establish a communication session. For example, the first data packet may be or include a TCP SYN packet. Stated otherwise, the first data packet may represent the initiation and/or start of a TCP three-way handshake.

At operation 415, the data processing system ingests first information into a probabilistic data structure. For example, the data processing system may ingest one or more pieces of information (extracted from the at least one first data packet) into a probabilistic data structure. In some embodiments, the first information may include and/or correspond to at least one of IP addresses and/or port numbers. For example, the first information may include a source IP address and a destination IP address. In some embodiments, the probabilistic data structure may store, keep, and/or more one or more sets of information. For example, the probabilistic data structure may store one or more hash values that represent respective pairs of IP addresses and port numbers extracted from corresponding TCP syn packets.

At operation 420, the data processing system identifies at least one second data packet. For example, the data processing system may detect inbound traffic intended for one or more client devices on the protected network. As another example, the data processing system may detect one or more TCP SYN-ACK packets. For example, the at one second data packet may correspond to a response (e.g., a TCP response).

At operation 425, the data processing system determines that the response does not correspond to at least one request. For example, the data processing system may, responsive to querying the probabilistic data structure, determine that a TCP response does not correspond to at least one TCP request represented in the probabilistic data structure. Stated otherwise, the data processing system may determine that the TCP response was not triggered and/or initiated by a correspond TCP request. As another example, the data processing system may, responsive to a comparison of hash values, determine that hash values (which represent information of a TCP response) do not correspond to hash values (which represent one or more TCP requests).

In some embodiments, the data processing system may query the probabilistic data structure using information extracted from the TCP response. For example, the data processing may extract a source IP address from the TCP response. Additionally, the data processing may, using the source IP address, search for one or more representations of TCP requests that list (as a destination IP address) the source IP address.

At operation 430, the data processing system drops the at least one second data packet. For example, the data processing system may prevent transmission of the TCP response. As another example, the data processing system may remove the TCP response for a queue or network stack. In some embodiments, the data processing system may drop one or TCP responses responsive to one or more queries of the probabilistic data structure returning no matches. Stated otherwise, in instances where the data processing system detects unsolicited TCP responses, the data processing system may drop the unsolicited TCP responses from a communications network.

FIG. 5A depicts an example network environment that can be used in connection with the methods and systems described herein. In brief overview, the network environment 500 includes one or more servers 104 (also generally referred to as servers, nodes, or remote machine) in communication with one or more client devices 502 (also generally referred to as clients, client node, client machines, client computers, client computing devices, endpoints, or endpoint nodes) via one or more networks 105. In some embodiments, the client devices 502 have the capacity to function as both a client node seeking access to resources provided by a server and as a server providing access to hosted resources for other client devices.

Although FIG. 5A shows a network 105 between the client devices 502 and the servers 104, the client devices 502 and the servers 104 can be on the same network 105. In embodiments, there are multiple networks 105 between the client devices 502 and the servers 104. The network 105 can include multiple networks such as a private network and a public network. The network 105 can include multiple private networks.

The network 105 can be connected via wired or wireless links. Wired links can include Digital Subscriber Line (DSL), coaxial cable lines, or optical fiber lines. The wireless links can include BLUETOOTH, Wi-Fi, Worldwide Interoperability for Microwave Access (WiMAX), an infrared channel or satellite band. The wireless links can also include any cellular network standards used to communicate among mobile devices, including standards that qualify as 1G, 2G, 3G, 4G, 5G or other standards. The network standards can qualify as one or more generation of mobile telecommunication standards by fulfilling a specification or standards such as the specifications maintained by International Telecommunication Union. Examples of cellular network standards include AMPS, GSM, GPRS, UMTS, LTE, LTE Advanced, Mobile WiMAX, and WiMAX-Advanced. Cellular network standards can use various channel access methods e.g., FDMA, TDMA, CDMA, or SDMA. In some embodiments, different types of data can be transmitted via different links and standards. In other embodiments, the same types of data can be transmitted via different links and standards.

The network 105 can be any type and/or form of network. The geographical scope of the network 105 can vary widely and the network 105 can be a body area network (BAN), a personal area network (PAN), a local-area network (LAN), e.g., Intranet, a metropolitan area network (MAN), a wide area network (WAN), or the Internet. The topology of the network 105 can be of any form and can include, e.g., any of the following: point-to-point, bus, star, ring, mesh, or tree. The network 105 can be an overlay network which is virtual and sits on top of one or more layers of other networks 105. The network 105 can be of any such network topology as known to those ordinarily skilled in the art capable of supporting the operations described herein. The network 105 can utilize different techniques and layers or stacks of protocols, including, e.g., the Ethernet protocol or the internet protocol suite (TCP/IP). The TCP/IP internet protocol suite can include application layer, transport layer, internet layer (including, e.g., IPv6), or the link layer. The network 105 can be a type of a broadcast network, a telecommunications network, a data communication network, or a computer network.

The network environment 500 can include multiple, logically grouped client devices 502. The logical group of client devices can be referred to as a data center 508 (or server farm or machine farm). In embodiments, the client devices 502 can be geographically dispersed. The data center 508 can be administered as a single entity or different entities. The data center 508 can include multiple data centers that can be geographically dispersed. The client devices 502 within each data center 508 can be homogeneous or heterogeneous (e.g., one or more of the client devices 502 can operate according to one type of operating system platform (e.g., WINDOWS NT, manufactured by Microsoft Corp. of Redmond, Washington), while one or more of the other client devices 502 can operate on according to another type of operating system platform (e.g., Unix, Linux, or Mac OS X)). The client devices 502 of each data center 508 do not need to be physically proximate to another client device 502 in the same machine farm. Thus, the group of client devices 502 logically grouped as a data center 508 can be interconnected using a network. Management of the data center 508 can be de-centralized. For example, one or more client devices 502 can comprise components, subsystems, and modules to support one or more management services for the data center 508.

The servers 104 can be a file server, application server, web server, proxy server, appliance, network appliance, gateway, gateway server, virtualization server, deployment server, SSL VPN server, or firewall. In embodiments, the servers 104 can be referred to as a remote machine or a node. Multiple nodes can be in the path between any two communicating servers.

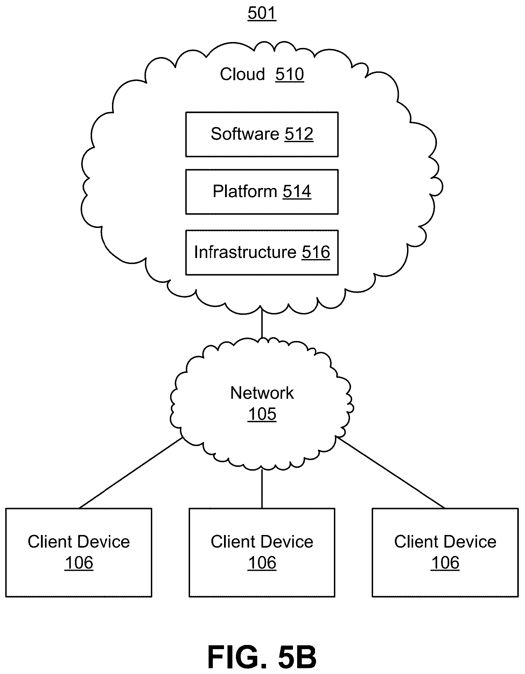

FIG. 5B illustrates an example cloud computing environment. A cloud computing environment 501 can provide the client device 106 with one or more resources provided by a network environment. The cloud computing environment 501 can include one or more client devices 106, in communication with the cloud 510 over one or more networks 105. Client devices 106 can include, e.g., thick clients, thin clients, and zero clients. A thick client can provide at least some functionality even when disconnected from the cloud 510 or servers 104. A thin client or a zero client can depend on the connection to the cloud 510 or the servers 104 to provide functionality. A zero client can depend on the cloud 510 or other networks 105 or the servers 104 to retrieve operating system data for the client device. The cloud 510 can include back end platforms, e.g., servers 104, storage, and/or server farms or data centers.

The cloud 510 can be public, private, or hybrid. Public clouds can include public servers (e.g., the servers 104) that are maintained by third parties to the client devices 106 or the owners of the clients. The servers 104 can be located off-site in remote geographical locations as disclosed above or otherwise. Public clouds can be connected to the servers 104 over a public network. Private clouds can include private servers (e.g., the servers 104) that are physically maintained by client devices 106 or owners of clients. Private clouds can be connected to the servers 104 over a private network 105. Hybrid clouds can include both the private and public networks 105 and servers 104.

The cloud 510 can also include a cloud-based delivery, e.g., Software as a Service (SaaS) 512, Platform as a Service (PaaS) 514, and the Infrastructure as a Service (IaaS) 516. IaaS can refer to a user renting the use of infrastructure resources that are needed during a specified time period. IaaS providers can offer storage, networking, servers, or virtualization resources from large pools, allowing the users to quickly scale up by accessing more resources as needed. PaaS providers can offer functionality provided by IaaS, including, e.g., storage, networking, servers, or virtualization, as well as additional resources such as, e.g., the operating system, middleware, or runtime resources. SaaS providers can offer the resources that PaaS provides, including storage, networking, servers, virtualization, operating system, middleware, or runtime resources. In some embodiments, SaaS providers can offer additional resources including, e.g., data and application resources.

Client devices 106 can access IaaS resources, SaaS resources, or PaaS resources. In embodiments, access to IaaS, PaaS, or SaaS resources can be authenticated. For example, a server or authentication server can authenticate a user via security certificates, HTTPS, or API keys. API keys can include various encryption standards such as, e.g., Advanced Encryption Standard (AES). Data resources can be sent over Transport Layer Security (TLS) or Secure Sockets Layer (SSL).

The client device 106, the client device 502, and/or the servers 104 can be deployed as and/or executed on any type and form of computing device, e.g., a computer, network device or appliance capable of communicating on any type and form of network and performing the operations described herein.

FIG. 5C depicts block diagrams of a computing device 503 useful for practicing an embodiment of the client device 106, the client device 502, and/or the server 104. As shown in FIG. 5C, each computing device 503 can include a central processing unit (shown as CPU 518), and a main memory unit (shown as memory 520). As shown in FIG. 5C, a computing device 503 can include one or more of a storage device 536, an installation device 532, a network interface 534, an input/out controller (shown as I/O controller 522), a display device 530, a keyboard 524, a pointing device 526 (e.g., a mouse), or an input/output device (shown as I/O devices 528). The storage device 536 can include, without limitation, a program 540, such as an operating system, software, or software associated with system 100.

The CPU 518 is any logic circuitry that responds to and processes instructions fetched from memory 520. The CPU 518 can be provided by a microprocessor unit, e.g.: those manufactured by Intel Corporation of Mountain View, California. The computing device 503 can be based on any of these processors, or any other processor capable of operating as described herein. The CPU 518 can utilize instruction level parallelism, thread level parallelism, different levels of cache, and multi-core processors. A multi-core processor can include two or more processing units on a single computing component.

Memory 520 can include one or more memory chips capable of storing data and allowing any storage location to be directly accessed by the CPU 518. Memory 520 can be volatile and faster than the storage device 536. Memory 520 can be Dynamic random access memory (DRAM) or any variants, including static random access memory (SRAM). Memory 520 or the storage device 536 can be non-volatile; e.g., non-volatile read access memory (NVRAM). Memory 520 can be based on any type of memory chip, or any other available memory chips. In the example depicted in FIG. 5C, the CPU 518 can communicate with memory 520 via a system bus (shown as bus 538).

A wide variety of I/O devices 528 can be present in the computing device 503. The I/O devices 528 can include keyboards, mice, trackpads, trackballs, touchpads, touch mice, multi-touch touchpads and touch mice, microphones, multi-array microphones, drawing tablets, cameras, or other sensors. Output devices can include video displays, graphical displays, speakers, headphones, or printers.

The I/O devices 528 can have both input and output capabilities, including, e.g., haptic feedback devices, touchscreen displays, or multi-touch displays. Touchscreen, multi-touch displays, touchpads, touch mice, or other touch sensing devices can use different technologies to sense touch, including, e.g., capacitive, surface capacitive, projected capacitive touch (PCT), in-cell capacitive, resistive, infrared, waveguide, dispersive signal touch (DST), in-cell optical, surface acoustic wave (SAW), bending wave touch (BWT), or force-based sensing technologies.

Some multi-touch devices can allow two or more contact points with the surface, allowing advanced functionality including, e.g., pinch, spread, rotate, scroll, or other gestures. Some touchscreen devices, including, e.g., Microsoft PIXELSENSE or Multi-Touch Collaboration Wall, can have larger surfaces, such as on a table-top or on a wall, and can also interact with other electronic devices. Some devices, such as the I/O devices 528, the display device 530, or group of devices can be augmented reality devices. The I/O devices 528 can be controlled by an I/O controller 522 as shown in FIG. 5C. The I/O controller 522 can control one or more I/O devices, such as, e.g., a keyboard 524 and a pointing device 526, e.g., a mouse or optical pen. Furthermore, an I/O device can also provide storage and/or an installation device 532 for the computing device 503. In embodiments, the computing device 503 can provide USB connections (not shown) to receive handheld USB storage devices. In embodiments, the I/O devices 528 can be a bridge between the bus 538 and an external communication bus, e.g., a USB bus, a SCSI bus, a FireWire bus, an Ethernet bus, a Gigabit Ethernet bus, a Fibre Channel bus, or a Thunderbolt bus.

In embodiments, the display device 530 can be connected to I/O controller 522. The display device 530 can include, e.g., liquid crystal displays (LCD), electronic papers (e-ink) displays, flexile displays, light emitting diode displays (LED), or other types of displays. In some embodiments, the display device 530 or the corresponding I/O controllers 522 can be controlled through or have hardware support for OPENGL or DIRECTX API or other graphics libraries. Any of the I/O devices 528 and/or the I/O controller 522 can include any type and/or form of suitable hardware, software, or combination of hardware and software to support, enable or provide for the connection and use the display device 530 by the computing device 503. For example, the computing device 503 can include any type and/or form of video adapter, video card, driver, and/or library to interface, communicate, connect, or otherwise use the display device 530. In embodiments, a video adapter can include multiple connectors to interface to the display device 530.

The computing device 503 can include the storage device 536 (e.g., one or more hard disk drives or redundant arrays of independent disks) for storing an operating system or other related software, and for storing application software programs (e.g., the program 540) such as any program related to the systems, methods, components, modules, elements, or functions depicted in FIGS. 1 and 2. Examples of the storage device 536 include, e.g., hard disk drive (HDD); optical drive including CD drive, DVD drive, or BLU-RAY drive; solid-state drive (SSD); USB flash drive; or any other device suitable for storing data. The storage device 536 can include multiple volatile and non-volatile memories, including, e.g., solid state hybrid drives that combine hard disks with solid state cache. The storage device 536 can be non-volatile, mutable, or read-only. The storage device 536 can be internal and connect to the computing device 503 via a bus 538. The storage device 536 can be external and connect to the computing device 503 via the I/O devices 528 that provides an external bus. The storage device 536 can connect to the computing device 503 via the network interface 534 over a network 105. Some client devices 106 may not require a non-volatile storage device (e.g., the storage device 536) and can be thin clients or zero client devices 106. The storage device 536 can be used as an installation device 532 and can be suitable for installing software and programs.

The computing device 503 can include a network interface 534 to interface to the network 105 through a variety of connections including, but not limited to, standard telephone lines LAN or WAN links (*e.g.,* 802.11, T1, T3, Gigabit Ethernet, Infiniband), broadband connections (*e.g.,* ISDN, Frame Relay, ATM, Gigabit Ethernet, Ethernet-over-SONET, ADSL, VDSL, BPON, GPON, fiber optical including FiOS), wireless connections, or some combination of any or all of the above. Connections can be established using a variety of communication protocols (e.g., TCP/IP, Ethernet, ARCNET, SONET, SDH, Fiber Distributed Data Interface (FDDI), IEEE 802.11a/b/g/n/ac CDMA, GSM, WiMax and direct asynchronous connections). The computing device 503 can communicate with other computing devices via any type and/or form of gateway or tunneling protocol e.g., Secure Socket Layer (SSL) or Transport Layer Security (TLS), QUIC protocol, or the Citrix Gateway Protocol manufactured by Citrix Systems, Inc. of Ft. Lauderdale, Florida. The network interface 534 can include a built-in network adapter, network interface card, PCMCIA network card, EXPRESSCARD network card, card bus network adapter, wireless network adapter, USB network adapter, modem, or any other device suitable for interfacing the computing device 503 to any type of network capable of communication and performing the operations described herein.

The computing device 503 (as depicted in FIG. 5C) can operate under the control of an operating system, which controls scheduling of tasks and access to system resources. The computing device 503 can be running any operating system configured for any type of computing device, including, for example, a desktop operating system, a mobile device operating system, a tablet operating system, or a smartphone operating system.

The computing device 503 can be any workstation, telephone, desktop computer, laptop or notebook computer, netbook, ULTRABOOK, tablet, server, handheld computer, mobile telephone, smartphone or other portable telecommunications device, media playing device, a gaming system, mobile computing device, or any other type and/or form of computing, telecommunications or media device that is capable of communication. The computing device 503 has sufficient processor power and memory capacity to perform the operations described herein. In some embodiments, the computing device 503 can have different processors, operating systems, and input devices consistent with the device.

In embodiments, the status of the client devices 502 and/or the servers 104 in the network 105 can be monitored as part of network management. In embodiments, the status of a machine can include an identification of load information (e.g., the number of processes on the machine, CPU, and memory utilization), of port information (e.g., the number of available communication ports and the port addresses), or of session status (e.g., the duration and type of processes, and whether a process is active or idle). In another of these embodiments, this information can be identified by a plurality of metrics, and the plurality of metrics can be applied at least in part towards decisions in load distribution, network traffic management, and network failure recovery as well as any aspects of operations of the present solution described herein.

The processes, systems and methods described herein can be implemented by the computing device 503 in response to the CPU 518 executing an arrangement of instructions contained in memory 520. Such instructions can be read into memory 520 from another computer-readable medium, such as the storage device 536. Execution of the arrangement of instructions contained in memory 520 causes the computing device 503 to perform the illustrative processes described herein. One or more processors in a multi-processing arrangement may also be employed to execute the instructions contained in memory 520. Hard-wired circuitry can be used in place of or in combination with software instructions together with the systems and methods described herein. Systems and methods described herein are not limited to any specific combination of hardware circuitry and software.

Although an example computing system has been described in FIG. 5C, the subject matter including the operations described in this specification can be implemented in other types of digital electronic circuitry, or in computer software, firmware, or hardware, including the structures disclosed in this specification and their structural equivalents, or in combinations of one or more of them.

At least one aspect is directed to a system. The system can include a network monitoring device. The network monitoring device can include one or more memory devices. The one or more memory devices can store executable instructions thereon. The executable instructions can, when executed by one or more processors, cause the one or more processors to monitor network traffic transmitted across a communications network. The executable instructions can cause the one or more processors to detect, based on the network traffic, at least one first data packet corresponding to a request to establish a communication session. The request can be a Transmission Control Protocol synchronize packet. The executable instructions can cause the one or more processors to, responsive to detection of the at least one first data packet, ingest first information associated with the at least one first data packet into a probabilistic data structure. The probabilistic data structure can store one or more sets of information that corresponds to a plurality of requests. The executable instructions can cause the one or more processors to identify, based on at least one of the network traffic or subsequently generated network traffic, at least one second data packet corresponding to a response. The response can be a Transmission Control Protocol synchronize-acknowledge packet. The executable instructions can cause the one or more processors to determine, responsive to a query of the probabilistic data structure, that the response does not correspond to either (i) the request or (ii) the plurality of requests. The executable instructions can cause the one or more processors to drop, responsive to determination that the response does not correspond to either (i) the request or (ii) the plurality of requests, the at least one second data packet from the communications network.

At least one aspect is directed to a method. The method can include monitoring, by one or more processing circuits, network traffic transmitted across a communications network. The method can include detecting, by the one or more processing circuits, based on the network traffic, at least one first data packet corresponding to a request to establish a communication session. The request can a Transmission Control Protocol synchronize packet. The method can include ingesting, by the one or more processing circuits, responsive to detecting the at least one first data packet, first information associated with the at least one first data packet into a probabilistic data structure. The probabilistic data structure can store one or more sets of information that corresponds to a plurality of requests. The method can include identifying, by the one or more processing circuits, based on at least one of the network traffic or subsequently generated network traffic, at least one second data packet corresponding to a response. The response can be a Transmission Control Protocol synchronize-acknowledge packet. The method can include determining, by the one or more processing circuits, responsive to querying the probabilistic data structure, that the response does not correspond to either (i) the request or (ii) the plurality of requests. The method can include dropping, by the one or more processing circuits, responsive to determining that the response does not correspond to either (i) the request or (ii) the plurality of requests, the at least one second data packet from the communications network.

At least one aspect is directed to one or more non-transitory storage media. The one or more non-transitory storage media can store instructions thereon. The instructions can, when executed by one or more processors, cause the one or more processors to perform operations that include monitoring network traffic transmitted across a communications network. The operations can include detecting, based on the network traffic, at least one first data packet corresponding to a request to establish a communication session. The operations can include, responsive to detecting the at least one first data packet, ingesting first information associated with the at least one first data packet into a probabilistic data structure. The probabilistic data structure can store one or more sets of information that corresponds to a plurality of requests. The operations can include identifying, based on at least one of the network traffic or subsequently generated network traffic, at least one second data packet corresponding to a response to the request to establish the communication session. The operations can include determining, responsive to querying the probabilistic data structure, that the response does not correspond to either (i) the request or (ii) the plurality of requests. The operations can include dropping, responsive to determining that the response does not correspond to either (i) the request or (ii) the plurality of requests, the at least one second data packet from the communications network.

The foregoing detailed description includes illustrative examples of various aspects and implementations and provides an overview or framework for understanding the nature and character of the claimed aspects and implementations. The drawings provide illustration and a further understanding of the various aspects and implementations and are incorporated in and constitute a part of this specification.

The subject matter and the operations described in this specification can be implemented in digital electronic circuitry, or in computer software, firmware, or hardware, including the structures disclosed in this specification and their structural equivalents, or in combinations of one or more of them. The subject matter described in this specification can be implemented as one or more computer programs, e.g., one or more circuits of computer program instructions, encoded on one or more computer storage media for execution by, or to control the operation of, data processing apparatuses. A computer storage medium can be, or be included in, a computer-readable storage device, a computer-readable storage substrate, a random or serial access memory array or device, or a combination of one or more of them. While a computer storage medium is not a propagated signal, a computer storage medium can be a source or destination of computer program instructions encoded in an artificially generated propagated signal. The computer storage medium can also be, or be included in, one or more separate components or media (e.g., multiple CDs, disks, or other storage devices). The operations described in this specification can be implemented as operations performed by a data processing apparatus on data stored on one or more computer-readable storage devices or received from other sources.

The terms "computing device" or "component" encompass various apparatuses, devices, and machines for processing data, including by way of example a programmable processor, a computer, a system on a chip, or multiple ones, or combinations of the foregoing. The apparatus can include special purpose logic circuitry, e.g., an FPGA (field programmable gate array) or an ASIC (application specific integrated circuit). The apparatus can also include, in addition to hardware, code that creates an execution environment for the computer program in question, e.g., code that constitutes processor firmware, a protocol stack, an operating system, a cross-platform runtime environment, a virtual machine, or a combination of one or more of them. The apparatus and execution environment can realize various different computing model infrastructures, such as web services, distributed computing, and grid computing infrastructures.

A computer program (also known as a program, software, software application, app, script, or code) can be written in any form of programming language, including compiled or interpreted languages, declarative or procedural languages, and can be deployed in any form, including as a stand-alone program or as a module, component, subroutine, object, or other unit suitable for use in a computing environment. A computer program can correspond to a file in a file system. A computer program can be stored in a portion of a file that holds other programs or data (e.g., one or more scripts stored in a markup language document), in a single file dedicated to the program in question, or in multiple coordinated files (e.g., files that store one or more modules, sub programs, or portions of code). A computer program can be deployed to be executed on one computer or on multiple computers that are located at one site or distributed across multiple sites and interconnected by a communication network.

The processes and logic flows described in this specification can be performed by one or more programmable processors executing one or more computer programs (e.g., components of the monitoring device 102) to perform actions by operating on input data and generating an output. The processes and logic flows can also be performed by, and apparatuses can also be implemented as, special purpose logic circuitry, e.g., an FPGA (field programmable gate array) or an ASIC (application specific integrated circuit). Devices suitable for storing computer program instructions and data include all forms of non-volatile memory, media, and memory devices, including by way of example semiconductor memory devices, e.g., EPROM, EEPROM, and flash memory devices; magnetic disks, e.g., internal hard disks or removable disks; magneto optical disks. The processor and the memory can be supplemented by, or incorporated in, special purpose logic circuitry.

While operations are depicted in the drawings in a particular order, such operations are not required to be performed in the particular order shown or in sequential order, and all illustrated operations are not required to be performed. Actions described herein can be performed in a different order. The separation of various system components does not require separation in all implementations, and the described program components can be included in a single hardware or software product.

The phraseology and terminology used herein is for the purpose of description and should not be regarded as limiting. Any references to implementations or elements or acts of the systems and methods herein referred to in the singular may also embrace implementations including a plurality of these elements, and any references in plural to any implementation or element or act herein may also embrace implementations including only a single element. Any implementation disclosed herein may be combined with any other implementation or embodiment.

References to "or" may be construed as inclusive so that any terms described using "or" may indicate any of a single, more than one, and all of the described terms. References to at least one of a conjunctive list of terms may be construed as an inclusive OR to indicate any of a single, more than one, and all of the described terms. For example, a reference to "at least one of 'A' and 'B'" can include only 'A,' only 'B,' as well as both 'A' and 'B.' Such references used in conjunction with "comprising" or other open terminology can include additional items.

The foregoing implementations are illustrative rather than limiting of the described systems and methods. Scope of the systems and methods described herein is thus indicated by the appended claims, rather than the foregoing description, and changes that come within the meaning and range of equivalency of the claims are embraced therein.

## Claims

1. A system, comprising:
a network monitoring device comprising one or more memory devices storing executable instructions thereon that, when executed by one or more processors, cause the one or more processors to:
monitor network traffic transmitted across a communications network;
detect, based on the network traffic, at least one first data packet corresponding to a request to establish a communication session, wherein the request is a Transmission Control Protocol synchronize packet;
responsive to detection of the at least one first data packet, ingest first information associated with the at least one first data packet into a probabilistic data structure, wherein the probabilistic data structure is configured to store one or more sets of information that correspond to a plurality of requests;
identify, based on at least one of the network traffic or subsequently generated network traffic, at least one second data packet corresponding to a response, wherein the response is a Transmission Control Protocol synchronize-acknowledge packet;
determine, responsive to a query of the probabilistic data structure, that the response does not correspond to either (i) the request or (ii) the plurality of requests; and
drop, responsive to determination that the response does not correspond to either (i) the request or (ii) the plurality of requests, the at least one second data packet from the communications network.

2. The system of claim 1, wherein the executable instructions further cause the one or more processors to:
determine that the response does not correspond to the request based on second information associated with the Transmission Control Protocol synchronize packet being absent from third information associated with the Transmission Control Protocol synchronize-acknowledge packet; or
determine that the response does not correspond to the plurality of requests based on fourth information associated with corresponding Transmission Control Protocol synchronize packets for the plurality of requests being absent from the third information.

3. The system of claim 1, further comprising:
the first information associated with the at least one first data packet to represent a first 4-tuple which includes (i) a first source Internet Protocol address, (ii) a first destination Internet Protocol address, (iii) a first source Transmission Control Protocol port, and (iv) a first destination Transmission Control Protocol port; and
second information associated with the at least one second data packet to represent a second 4-tuple which includes (v) a second source Internet Protocol address, (vi) a second destination Internet Protocol address, (vii) a second source Transmission Control Protocol port, and (viii) a second destination Transmission Control Protocol port;
wherein the executable instructions further cause the one or more processors to:
determine that the response does not correspond to the request based on at least one of:
the first source Internet Protocol address not matching the second destination Internet Protocol address;
the first destination Internet Protocol address not matching the second source Internet Protocol address;
the first source Transmission Control Protocol port not matching the second destination Transmission Control Protocol port; or
the first destination Transmission Control Protocol port not matching the second source Transmission Control Protocol port.

4. The system of claim 1, wherein the probabilistic data structure is a bloom filter, and wherein the executable instructions further cause the one or more processors to:
extract, from the first information associated with the at least one first data packet, a 4-tuple which identifies at least one Internet Protocol address and at least one Transmission Control Protocol port;
generate, responsive to execution of a hash function, a hash value to represent the 4-tuple; and
ingest, responsive to generation of the hash value, the hash value into the bloom filter.

5. The system of claim 1, wherein the executable instructions further cause the one or more processors to:
generate, responsive to execution of a hash function using the first information, a first hash value which represents the first information;
store, responsive to generation of the first hash value, the first hash value in the probabilistic data structure, wherein the probabilistic data structure includes a plurality of hash values, and wherein a respective hash value of the plurality of hash values represents information for a corresponding request of the plurality of requests;
generate, responsive to execution of the hash function using second information associated with the at least one second data packet, a second hash value which represents the second information; and
determine, responsive to a determination that the probabilistic data structure does not include the second hash value,, that the response does not correspond to the request or the plurality of requests; and/or
wherein the executable instructions further cause the one or more processors to:
modify, subsequent to a first amount of time having elapsed, a designation for the probabilistic data structure;
generate, responsive to modification of the designation, a second probabilistic data structure configured to store information associated with one or more subsequent requests to establish communication; and
replace, subsequent to a second amount of time having elapsed, the probabilistic data structure with the second probabilistic data structure by:
terminating the probabilistic data structure; and
changing the second probabilistic data structure to the designation; and/or
wherein the executable instructions further cause the one or more processors to:
apply one or more tags to the first information associated with the at least one first data packet, wherein the one or more tags identify an amount of time to store the first information in the probabilistic data structure; and
cause, responsive to the amount of time having elapsed, a removal of the first information from the probabilistic data structure.

6. The system of claim 1, wherein the probabilistic data structure includes a plurality of hash values which represent the request and the plurality of requests, and wherein the executable instructions further cause the one or more processors to:
generate, responsive to execution of a hash function, a hash value for second information associated with the at least one second data packet;
query the probabilistic data structure using the hash value; and
determine, based on the query not returning any matches, that the response does not correspond to either (i) the request or (ii) the plurality of requests; and/or
wherein the communications network is a protected network that includes at least one protected device, wherein the network monitoring device is included in the protected network, and wherein the executable instructions further cause the one or more processors to:
determine, prior to transmission across the protected network, that the at least one first data packet corresponds to the at least one protected device; and
forward the at least one first data packet to a device which was identified by the at least one first data packet; and/or
wherein the at least one first data packet is transmitted by a computing device protected by the network monitoring device, and wherein the executable instructions further cause the one or more processors to:
determine that the at least one first data packet is associated with the computing device; and
apply one or more tags to the first information to indicate that the at least one first data packet is associated with the computing device.

7. A method, comprising:
monitoring, by one or more processing circuits, network traffic transmitted across a communications network;
detecting, by the one or more processing circuits, based on the network traffic, at least one first data packet corresponding to a request to establish a communication session, wherein the request is a Transmission Control Protocol synchronize packet;
ingesting, by the one or more processing circuits, responsive to detecting the at least one first data packet, first information associated with the at least one first data packet into a probabilistic data structure, wherein the probabilistic data structure is configured to store one or more sets of information that corresponds to a plurality of requests;
identifying, by the one or more processing circuits, based on at least one of the network traffic or subsequently generated network traffic, at least one second data packet corresponding to a response, wherein the response is a Transmission Control Protocol synchronize-acknowledge packet;
determining, by the one or more processing circuits, responsive to querying the probabilistic data structure, that the response does not correspond to either (i) the request or (ii) the plurality of requests; and
dropping, by the one or more processing circuits, responsive to determining that the response does not correspond to either (i) the request or (ii) the plurality of requests, the at least one second data packet from the communications network.

8. The method of claim 7, further comprising:
determining, by the one or more processing circuits, that the response does not correspond to the request based on second information associated with the Transmission Control Protocol synchronize packet being absent from third information associated with the Transmission Control Protocol synchronize-acknowledge packet; or
determining, by the one or more processing circuits, that the response does not correspond to the plurality of requests based on fourth information associated with corresponding Transmission Control Protocol synchronize packets for the plurality of requests being absent from the third information.

9. The method of claim 7, wherein the first information associated with the at least one first data packet represents a first 4-tuple which includes (i) a first source Internet Protocol address, (ii) a first destination Internet Protocol address, (iii) a first source Transmission Control Protocol port, and (iv) a first destination Transmission Control Protocol port, wherein second information associated with the at least one second data packet represents a second 4-tuple which includes (v) a second source Internet Protocol address, (vi) a second destination Internet Protocol address, (vii) a second source Transmission Control Protocol port, and (viii) a second destination Transmission Control Protocol port; and further comprising:
determining, by the one or more processing circuits, that the response does not correspond to the request based on at least one of:
the first source Internet Protocol address not matching the second destination Internet Protocol address;
the first destination Internet Protocol address not matching the second source Internet Protocol address;
the first source Transmission Control Protocol port not matching the second destination Transmission Control Protocol port; or
the first destination Transmission Control Protocol port not matching the second source Transmission Control Protocol port.

10. The method of claim 7, wherein the probabilistic data structure is a bloom filter, and further comprising:
extracting, by the one or more processing circuits, from the first information associated with the at least one first data packet, a 4-tuple which identifies at least one Internet Protocol address and at least one Transmission Control Protocol port;
generating, by the one or more processing circuits, responsive to executing a hash function, a hash value to represent the 4-tuple; and
ingesting, by the one or more processing circuits, responsive to generating the hash value, the hash value into the bloom filter.

11. The method of claim 7, further comprising:
generating, by the one or more processing circuits, responsive to executing a hash function using the first information, a first hash value which represents the first information;
storing, by the one or more processing circuits, responsive to generating the first hash value, the first hash value in the probabilistic data structure, wherein the probabilistic data structure includes a plurality of hash values, and wherein a respective hash value of the plurality of hash values represents information for a corresponding request of the plurality of requests;
generating, by the one or more processing circuits, responsive to executing the hash function using second information associated with the at least one second data packet, a second hash value which represents the second information; and
determining, by the one or more processing circuits, responsive to determining that the probabilistic data structure does not include the second hash value,, that the response does not correspond to the request or the plurality of requests.

12. The method of claim 7, further comprising:
modifying, by the one or more processing circuits, subsequent to a first amount of time having elapsed, a designation for the probabilistic data structure;
generating, by the one or more processing circuits, responsive to modifying the designation, a second probabilistic data structure configured to store information associated with one or more subsequent requests to establish communication; and
replacing, by the one or more processing circuits, subsequent to a second amount of time having elapsed, the probabilistic data structure with the second probabilistic data structure by:
terminating the probabilistic data structure; and
changing the second probabilistic data structure to the designation; and/or
the method further comprises:
applying, by the one or more processing circuits, one or more tags to the first information associated with the at least one first data packet, wherein the one or more tags identify an amount of time to store the first information in the probabilistic data structure; and
causing, by the one or more processing circuits, responsive to the amount of time having elapsed, a removal of the first information from the probabilistic data structure.

13. One or more non-transitory storage media configured to store instructions thereon that, when executed by one or more processors, cause the one or more processors to perform operations comprising:
monitoring network traffic transmitted across a communications network;
detecting, based on the network traffic, at least one first data packet corresponding to a request to establish a communication session;
responsive to detecting the at least one first data packet, ingesting first information associated with the at least one first data packet into a probabilistic data structure, wherein the probabilistic data structure is configured to store one or more sets of information that corresponds to a plurality of requests;
identifying, based on at least one of the network traffic or subsequently generated network traffic, at least one second data packet corresponding to a response to the request to establish the communication session;
determining, responsive to querying the probabilistic data structure, that the response does not correspond to either (i) the request or (ii) the plurality of requests; and
dropping, responsive to determining that the response does not correspond to either (i) the request or (ii) the plurality of requests, the at least one second data packet from the communications network.

14. The one or more non-transitory storage media of claim 13, wherein the request is a Transmission Control Protocol synchronize packet, wherein the response is a Transmission Control Protocol synchronize-acknowledge packet, and wherein the operations further comprise:
determining that the response does not correspond to the request based on third information associated with the Transmission Control Protocol synchronize packet being absent from fourth information associated with the Transmission Control Protocol synchronize-acknowledge packet; or
determining that the response does not correspond to the plurality of requests based on fifth information associated with corresponding Transmission Control Protocol synchronize packets for the plurality of requests being absent from the fourth information.

15. The one or more non-transitory storage media of claim 13, wherein the probabilistic data structure is a bloom filter, and wherein the operations further comprise:
extracting, from the first information associated with the at least one first data packet, a 4-tuple which identifies at least one Internet Protocol address and at least one Transmission Control Protocol port;
generating, responsive to executing a hash function, a hash value to represent the 4-tuple; and
ingesting, responsive to generating the hash value, the hash value into the bloom filter.
